# EUROPEAN PATENT SPECIFICATION

(11) **EP 3 208 920 B1**
(45) Date of publication and mention of the grant of the patent: **12.09.2018**
(21) Application number: 17152820.1
(22) Date of filing: 24.01.2017
(51) Int. Cl.: H02K 24/00, H02K 3/52

(54) **RESOLVER STATOR**
DREHMELDERSTATOR
STATOR DE RÉSOLVEUR

(30) Priority: 09.02.2016 JP 2016022479
(43) Date of publication of application: 23.08.2017
(62) Divisional of application: 17202648.6
(73) Proprietor: Japan Aviation Electronics Industry, Shibuya-ku Tokyo (JP)
(72) Inventor: OZAKI, Yoshiaki, Tokyo (JP)
(74) Representative: GIE Innovation Competence Group

(56) References cited:
- JP-A- 2000 102 203

## Description

### BACKGROUND OF THE INVENTION

### 1. Field of the Invention

The present invention relates to a resolver stator.

### 2. Description of Related Art

As shown in Fig. 8 of this application, Japanese Unexamined Patent Application Publication No. 2000-102203 discloses a stator core 102 having a structure in which a hooking projection 101 for hooking a connecting wire between two teeth 100 that are adjacent to each other in the circumferential direction is disposed.

However, in the structure disclosed in Japanese Unexamined Patent Application Publication No. 2000-102203, when an operator grips a stator having the stator core 102, there is a possibility that the operator may touch the connecting wire hooked to the hooking projection 101, which may damage the connecting wire.

It is an object of the present invention to provide a stator that prevents a connecting wire from being easily damaged.

### SUMMARY OF THE INVENTION

A first aspect of the present invention is a resolver stator including: a stator core including a yoke having an annular shape, and a plurality of teeth projecting inward in a radial direction from the yoke; a plurality of coils wound around the plurality of teeth, respectively; a connecting wire that electrically connects the plurality of coils to each other; and a guide hook that guides the connecting wire. The resolver stator has a first axial direction parallel to a rotation axis of the resolver stator, and a second axial direction opposite to the first axial direction. The plurality of coils include a first coil and a second coil, the first coil and the second coil being adjacent to each other in a circumferential direction. At least a part of the connecting wire extends from a first coil outside space to a second coil outside space, the first coil outside space being located outward in the radial direction relative to the first coil and located on the first axial direction side relative to the stator core, the second coil outside space being outward in the radial direction relative to the second coil and located on the first axial direction side relative to the stator core. The connecting wire is hooked to the guide hook so as to be curved in a convex shape projecting in the second axial direction while extending from the first coil outside space to the second coil outside space. The guide hook projects inward in the radial direction and in the second axial direction, and faces the connecting wire in the radial direction.

A second aspect of the present invention is a resolver stator including: a stator core including a yoke having an annular shape, and a plurality of teeth projecting inward in a radial direction from the yoke; a plurality of coils wound around the plurality of teeth, respectively; a connecting wire; a guide hook that guides the connecting wire; and an external connecting portion that holds an end of the connecting wire. The resolver stator has a first axial direction parallel to a rotation axis of the resolver stator, and a second axial direction opposite to the first axial direction. The external connecting portion includes a terminal that projects in the first axial direction and is electrically connected to the end of the connecting wire. The connecting wire extends from a coil outside space to the terminal of the external connecting portion, the coil outside space being located outward in the radial direction relative to the coil and located on the first axial direction side relative to the stator core. The connecting wire is hooked to the guide hook so as to be curved in a convex shape projecting in the second axial direction while extending from the coil outside space to the terminal of the external connecting portion. The guide hook projects inward in the radial direction and in the second axial direction, and faces the connecting wire in the radial direction.

According to the present invention, it is possible to achieve the resolver stator having a structure in which the connecting wire hooked to the guide hook is less likely to be touched from below, which prevents the connecting wire from being easily damaged.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a perspective view of a resolver, in which the illustration of coils and connecting wires is omitted (first exemplary embodiment);
Fig. 2 is an enlarged view showing a major part of a resolver stator (first exemplary embodiment);
Fig. 3 is another enlarged view showing the major part of the resolver stator (first exemplary embodiment);
Fig. 4 is a sectional view taken along a line IV-IV of Fig. 5 (first exemplary embodiment);
Fig. 5 is a plan view of the resolver stator (first exemplary embodiment);
Fig. 6 is still another enlarged view showing the major part of the resolver stator (first exemplary embodiment);
Fig. 7 is an enlarged view showing a major part of a resolver stator, in which the illustration of coils and connecting wires is omitted (second exemplary embodiment); and

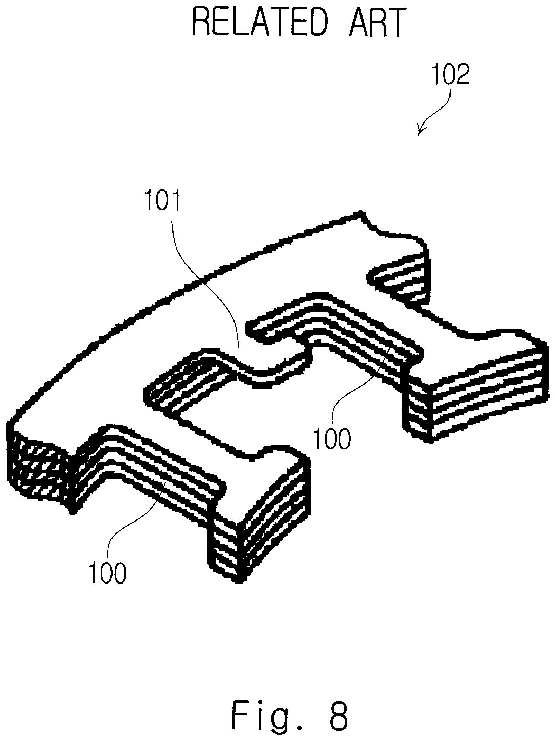

Fig. 8 is a diagram corresponding to Fig. 4 of Japanese Unexamined Patent Application Publication No. 2000-102203.

### DESCRIPTION OF THE EXEMPLARY EMBODIMENTS

### (First exemplary embodiment)

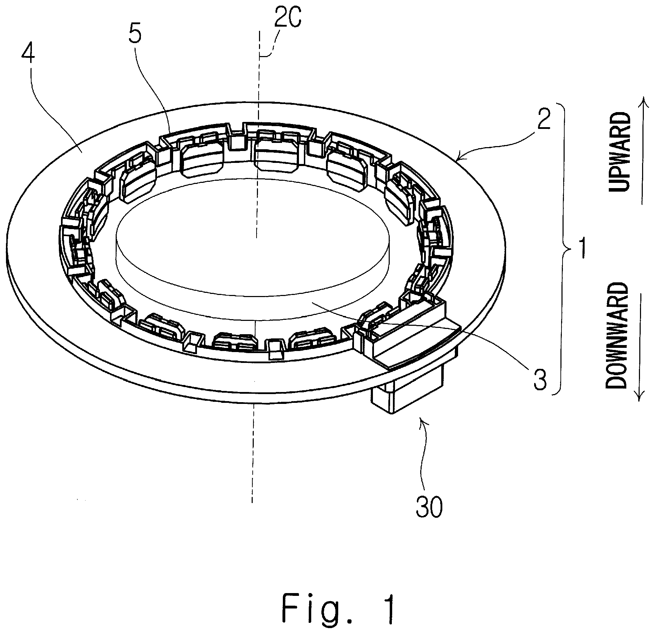

A first exemplary embodiment will be described below with reference to Figs. 1 to 6. As shown in Fig. 1, a resolver 1 includes a resolver stator 2 and a resolver rotor 3 that is fixed to a shaft of, for example, a motor or an internal combustion (not shown). The resolver 1 is used to measure the angle and rotational speed of the shaft. The resolver 1 is a so-called inner rotor type having a structure in which the resolver rotor 3 is disposed inward in the radial direction relative to the resolver stator 2. The resolver stator 2 has a rotation axis 2C.

Hereinafter, as a general rule, the term "radial direction" refers to the radial direction of the resolver stator 2 and the term "circumferential direction" refers to the circumferential direction of the resolver stator 2. The resolver stator 2 has an upward direction (first axial direction) parallel to the rotation axis 2C, and a downward direction (second axial direction) opposite to the upward direction.

As shown in Figs. 1 to 3, the resolver stator 2 includes a stator core 4, a resin functional portion 5, a plurality of coils 6, a plurality of connecting wires 7, and an external connecting portion 30.

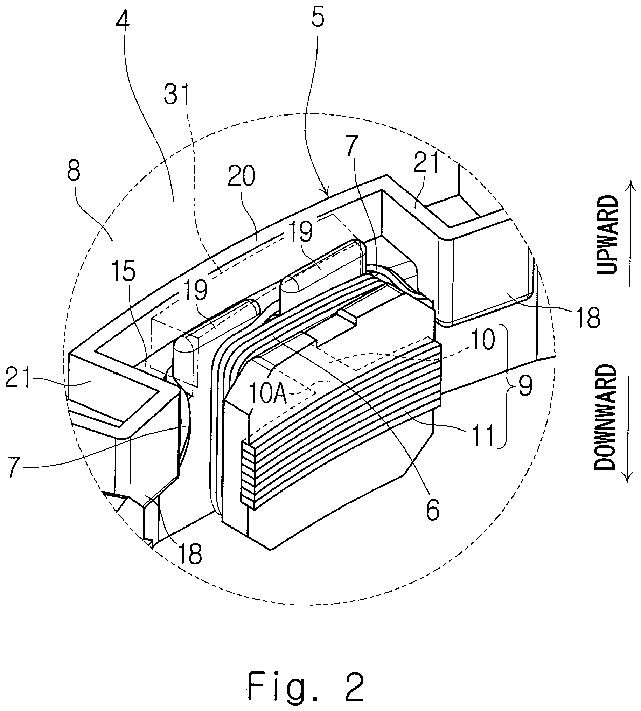

As shown in Fig. 2, in the first exemplary embodiment, the stator core 4 is a laminated body of electromagnetic steel sheets. The stator core 4 includes a yoke 8 having an annular shape, and a plurality of teeth 9 projecting inward in the radial direction from the yoke 8. Each of the teeth 9 includes a tooth winding portion 10 and a teeth distal end 11. The tooth winding portion 10 extends from the yoke 8 toward the rotation axis 2C. The tooth winding portion 10 is elongated along the radial direction. The teeth distal end 11 is disposed at a distal end 10A of the tooth winding portion 10 and extends along the circumferential direction. Note that the term "plan view" means a view along the rotation axis 2C.

Each coil 6 is wound around the tooth winding portion 10 of each of the teeth 9. The coils 6 may include only coils for excitation, may include only coils for detection, or may include coils for excitation and coils for detection. The number of turns of each coil 6 is adjusted as appropriate so that a generated induced voltage is sinusodially distributed. In the first exemplary embodiment, the number of turns of each coil 6 is not particularly limited.

Referring now to Fig. 2, a coil outside space 31 is defined. The coil outside space 31 is a space that is located outward in the radial direction relative to each coil 6 and is formed on the upward direction side relative to the stator core 4 (above the stator core 4). The resolver stator 2 includes a plurality of coil outside spaces 31. The number of the plurality of coil outside spaces 31 is equal to the number of the plurality of coils 6. Each coil outside space 31 faces each coil 6 in the radial direction.

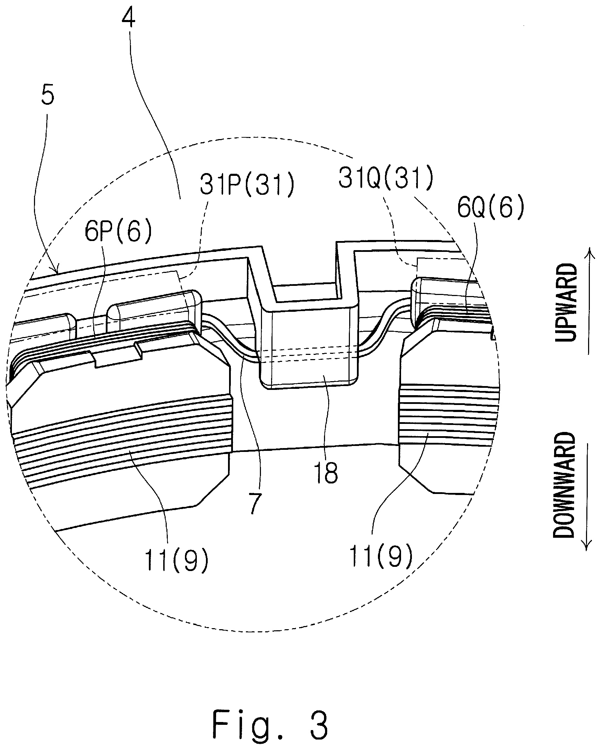

As shown in Fig. 3, each the connecting wire 7 electrically connects the plurality of coils 6 to each other. Specifically, some connecting wires 7 electrically connect a plurality of excitation coils included in the plurality of coils 6 to each other, and other connecting wires 7 electrically connect a plurality of detection coils included in the plurality of coils 6 to each other. As shown in Fig. 3, the plurality of coils 6 include a first coil 6P (first coil) and a second coil 6Q (second coil) that are adjacent to each other in the circumferential direction. Each connecting wire 7 extends from a first coil outside space 31P (first space), which is the coil outside space 31 corresponding to the first coil 6P, toward a second coil outside space 31Q (second space) which is the coil outside space 31 corresponding to the second coil 6Q.

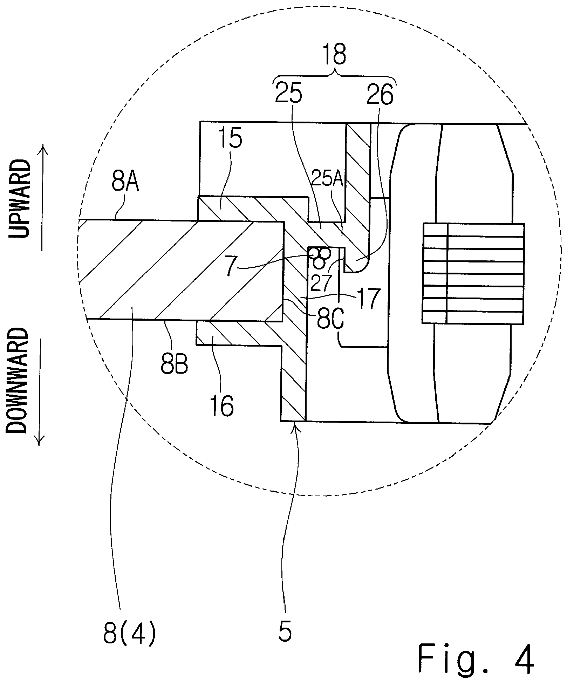

The resin functional portion 5 (insulator) is made of insulating resin and is fixed to the stator core 4 by, for example, insert molding. The resin functional portion 5 is provided mainly for preventing the plurality of coils 6 and the plurality of connecting wires 7 from being brought into direct contact with the stator core 4. As shown in Fig. 4, the resin functional portion 5 includes a core upper surface cover portion 15, a core lower surface cover portion 16, and a core inner peripheral surface cover portion 17. As shown in Fig. 2, the resin functional portion 5 further includes a plurality of guide hooks 18 and a plurality of guide pins 19 (guide projections). The resin functional portion 5 also includes a plurality of outward opposed walls 20 and a plurality of side opposed walls 21.

As shown in Fig. 4, the yoke 8 of the stator core 4 has a yoke upper surface 8A, which faces upward, a yoke lower surface 8B, which faces downward, and an inner peripheral surface 8C. The core upper surface cover portion 15 is disposed on the yoke upper surface 8A so as to cover the yoke upper surface 8A. The core lower surface cover portion 16 is disposed on the yoke lower surface 8B so as to cover the yoke lower surface 8B. The core inner peripheral surface cover portion 17 is disposed on the inner peripheral surface 8C so as to cover the inner peripheral surface 8C. Accordingly, the core upper surface cover portion 15, the core lower surface cover portion 16, and the core inner peripheral surface cover portion 17 form a U-shape in cross section.

As shown in Fig. 3, each guide hook 18 is disposed between two coils 6 that are adjacent to each other in the circumferential direction. Referring to Fig. 3, each guide hook 18 is disposed between the first coil 6P and the second coil 6Q. Each guide hook 18 is disposed so as to be visible from the rotation axis 2C of the resolver stator 2. Each guide hook 18 is disposed at a distance, in the circumferential direction, from the teeth distal end 11 of the two teeth 9, which are adjacent to each other in the circumferential direction, when it is viewed from the rotation axis 2C of the resolver stator 2. Each guide hook 18 guides the connecting wire 7 extending from the first coil outside space 31P to the second coil outside space 31Q. As shown in Fig. 4, each guide hook 18 projects inward in the radial direction and downward from the core inner peripheral surface cover portion 17. Each guide hook 18 projects inward in the radial direction so as to be apart from the yoke 8. Each guide hook 18 is disposed inward in the radial direction relative to the yoke 8. Each guide hook 18 includes an inner projecting portion 25 which projects inward in the radial direction from the core inner peripheral surface cover portion 17, and a lower projecting portion 26 which projects downward from a distal end 25A of the inner projecting portion 25. Due to the presence of the inner projecting portion 25 and the lower projecting portion 26, the guide hook 18 has a groove 27 that is opened downward. Each connecting wire 7 is accommodated in the groove 27 of the corresponding guide hook 18. In the first exemplary embodiment, three connecting wires 7 are accommodated in one groove 27. Note that the number of connecting wires 7 to be accommodated in one groove 27 may be one, two, or four or more, depending on the number of phases of the excitation signals, the number of phases of the detection signals, how to wind wires, and the like. In the first exemplary embodiment, the number of phases of the excitation signals is one, and the number of phases of the detection signals is two.

As shown in Fig. 2, each guide pin 19 is disposed outward in the radial direction relative to each coil 6. In the first exemplary embodiment, two guide pins 19 are disposed outward in the radial direction relative to one coil 6. In other words, the two guide pins 19 face one coil 6 in the radial direction. The two guide pins 19 are adjacent to one coil 6 in the radial direction. The two guide pins 19 are disposed at locations slightly apart from each other in the circumferential direction. The two guide pins 19 face each other in the circumferential direction. Each guide pin 19 guides the connecting wire 7. Each guide pin 19 projects upward from the core upper surface cover portion 15. Each guide pin 19 has a flat-plate shape. The thickness direction of each guide pin 19 is parallel to the projecting direction of the tooth winding portion 10 of the nearest tooth 9. Note that the thickness direction of each guide pin 19 may be parallel to the radial direction. Each guide pin 19 has a flat-plate shape in the first exemplary embodiment, but instead may have a curved plate shape extending along the circumferential direction.

Each outward opposed wall 20 is disposed outward in the radial direction relative to each coil 6. In the first exemplary embodiment, one outward opposed wall 20 is disposed outward in the radial direction relative to one coil 6. Specifically, two guide pins 19 are disposed outward in the radial direction relative to one coil 6, and one outward opposed wall 20 is disposed outward in the radial direction relative to the two guide pins 19. The one outward opposed wall 20 is disposed at a location slightly apart from the two guide pins 19 in the radial direction. The one outward opposed wall 20 faces the two guide pins 19 in the radial direction. Each outward opposed wall 20 projects upward from the core upper surface cover portion 15. Each outward opposed wall 20 has a curved plate shape extending along the circumferential direction. Each outward opposed wall 20 has a curved plate shape in the first exemplary embodiment, but instead may have a flat-plate shape.

Two side opposed walls 21 are disposed so as to sandwich the two guide pins 19 in the circumferential direction. Each of the two side opposed walls 21 is disposed at a location slightly apart from the two guide pins 19 in the circumferential direction. Each of the two side opposed walls 21 faces the two guide pins 19 in the circumferential direction. Each of the two side opposed walls 21 projects upward from the core upper surface cover portion 15. Each of the two side opposed walls 21 has a flat-plate shape. The thickness direction of each of the two side opposed walls 21 is parallel to the circumferential direction. Each of the two side opposed walls 21 is joined to the outward opposed wall 20 in a seamless manner. In other words, each of the two side opposed walls 21 extends inward in the radial direction from both ends of the outward opposed wall 20 in the circumferential direction. The thickness direction of each of the two side opposed walls 21 is parallel to the circumferential direction, but is not necessarily parallel to the circumferential direction. Each of the two side opposed walls 21 has a flat-plate shape, but instead may have a curved plate shape.

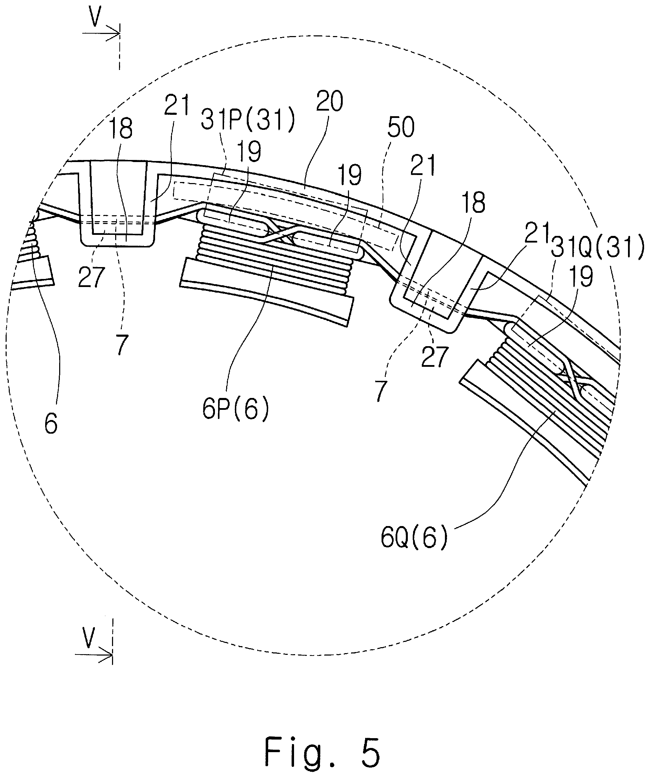

Next, the arrangement of the connecting wires 7 will be described in detail with reference to Fig. 5. Referring to Fig. 5, the connecting wire 7 extends from the first coil outside space 31P to the second coil outside space 31Q in the following order. That is, (1) the connecting wire 7 passes outward in the radial direction relative to the guide pin 19 that is closer to the second coil 6Q than the other one of the two guide pins 19 facing the first coil 6P in the radial direction; (2) the connecting wire 7 further passes through the groove 27 of the guide hook 18 that is disposed between the first coil 6P and the second coil 6Q; and (3) the connecting wire 7 further passes outward in the radial direction relative to the guide pin 19 that is closer to the first coil 6P than the other one of the two guide pins 19 facing the second coil 6Q in the radial direction. Further, when the connecting wire 7 passes outward in the radial direction relative to the guide pin 19, the connecting wire 7 passes inward in the radial direction relative to the outward opposed wall 20 facing the guide pin 19 in the radial direction. In other words, when the connecting wire 7 passes outward in the radial direction relative to the guide pin 19, the connecting wire 7 passes between the guide pin 19 and the outward opposed wall 20 facing the guide pin 19 in the radial direction. On its way from the guide pin 19 to the guide hook 18, the connecting wire 7 passes between the guide pin 19 and the side opposed wall 21 facing the guide pin 19 in the circumferential direction. When the connecting wire 7 is hooked to the guide pin 19 and passes outward in the radial direction relative to the guide pin 19, the connecting wire 7 is curved so as to be convex outward in the radial direction. When the connecting wire 7 is hooked to the guide hook 18 and passes through the groove 27 of the guide hook 18, the connecting wire 7 is curved so as to be convex downward. Since the connecting wire 7 is hooked to the guide hook 18 and passes through the groove 27 of the guide hook 18, the connecting wire 7 hooked to the guide hook 18 is less likely to be touched from below, thereby achieving the resolver stator 2 in which the connecting wire 7 is prevented from being easily damaged.

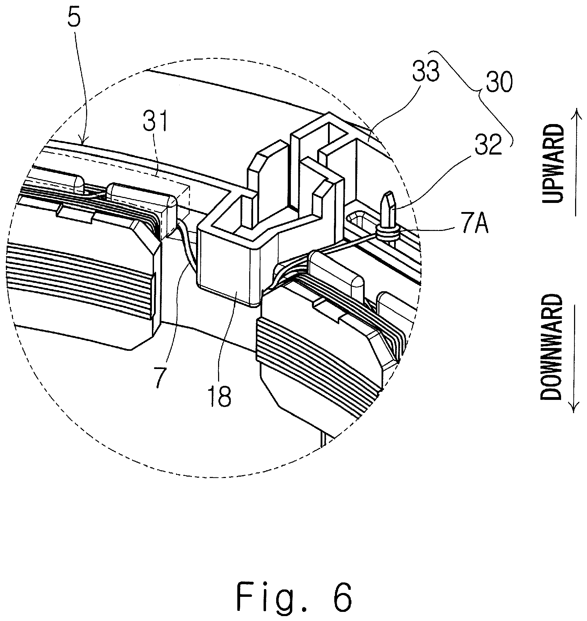

Next, the external connecting portion 30 will be described with reference to Fig. 6. As shown in Fig. 6, the external connecting portion 30 is a portion that receives an excitation signal supplied from an external device, outputs detection signals generated by the resolver stator 2 to the external device, and holds an end 7A of each of the plurality of connecting wires 7. The external connecting portion 30 includes a plurality of terminals 32 and a terminal holding portion 33. The end 7A of each of the plurality of connecting wires 7 is electrically connected to a corresponding one of the plurality of terminals 32. The terminal holding portion 33 holds the plurality of terminals 32 by insert molding. Fig. 6 illustrates only one of the plurality of terminals 32. The terminal holding portion 33 is formed integrally with the resin functional portion 5. Each terminal 32 projects upward. In the first exemplary embodiment, each terminal 32 has a pin shape. The end 7A of each connecting wire 7 is wound around the corresponding terminal 32.

At least one connecting wire 7 extends from the coil outside space 31 to any one of the terminals 32 of the external connecting portion 30. This connecting wire 7 is hooked to the guide hook 18 so as to be curved in a convex shape projecting downward while extending from the coil outside space 31 to the terminal 32 of the external connecting portion 30.

The first exemplary embodiment described above has the following features.

That is, the resolver stator 2 includes: the stator core 4 including the yoke 8 having an annular shape, and the plurality of teeth 9 projecting inward in the radial direction from the yoke 8; the plurality of coils 6 wound around the plurality of teeth 9, respectively; the connecting wires 7 that electrically connect the plurality of coils 6 to each other; and the guide hooks 18 that guide the connecting wires 7. The resolver stator 2 has the upward direction (first axial direction) parallel to the rotation axis 2C of the resolver stator 2, and the downward direction (second axial direction) opposite to the upward direction. The plurality of coils 6 include the first coil 6P (first coil) and the second coil 6Q (second coil) that are adjacent to each other in the circumferential direction. At least a part of each connecting wire 7 extends from the first coil outside space 31P (first coil outside space), which is located outward in the radial direction relative to the first coil 6P and located on the upward direction side (upper side, first axial direction side) relative to the stator core 4, toward the second coil outside space 31Q (second coil outside space) which is located outward in the radial direction relative to the second coil 6Q and located on the upward direction side (upper side, first axial direction side) relative to the stator core 4. The connecting wire 7 is hooked to the guide hook 18 so as to be curved in a convex shape projecting downward while extending from the first coil outside space 31P to the second coil outside space 31Q. As shown in Fig. 4, the guide hook 18 projects inward in the radial direction and downward, and faces the connecting wire 7 in the radial direction. According to the above structure, the connecting wire 7 hooked to the guide hook 18 is less likely to be touched from below and from the inner peripheral side of the resolver stator 2, thereby achieving the resolver stator 2 in which the connecting wire 7 is prevented from being easily damaged.

The resolver stator 2 further includes: the guide pins 19 (guide projections) that are disposed outward in the radial direction relative to the coils 6 and project upward; and the side opposed walls 21 that face the guide pins 19 in the circumferential direction. Each connecting wire 7 passes outward in the radial direction relative to the guide pin 19 and passes between the guide pin 19 and the side opposed wall 21 while extending from the first coil outside space 31P to the guide hook 18. According to the above structure, the connecting wire 7 is less likely to be touched between the guide pin 19 and the guide hook 18, thereby securely achieving the resolver stator 2 in which the connecting wire 7 is prevented from being easily damaged.

Note that in the first exemplary embodiment, the resolver stator 2 includes the plurality of guide hooks 18, the plurality of guide pins 19, the plurality of outward opposed walls 20, and the plurality of side opposed walls 21. Alternatively, the resolver stator 2 may include only one guide hook 18, only one guide pin 19, only one outward opposed wall 20, and only one side opposed wall 21.

The resolver stator 2 further includes the outward opposed walls 20 that are disposed outward in the radial direction relative to the guide pins 19, and face the guide pins 19 in the radial direction. According to the above structure, each connecting wire 7 is less likely to be touched outward in the radial direction relative to the guide pin 19, thereby securely achieving the resolver stator 2 in which the connecting wire 7 is prevented from being easily damaged.

The side opposed walls 21 and the outward opposed walls 20 are joined to each other in a seamless manner. According to the above structure, when the connecting wire 7 hooked to the guide pin 19 is fixed with an adhesive or the like, the spread of the adhesive to the peripheral area is effectively suppressed by the side opposed walls 21 and the outward opposed walls 20, so that the amount of required adhesive is reduced, which contributes a reduction in the weight of the resolver stator 2. However, the connecting wire 7 hooked to the guide pin 19 need not be necessarily fixed with an adhesive or the like.

Each guide pin 19 has a plate shape. According to the above structure, when the connecting wire 7 hooked to the guide pin 19 is fixed with an adhesive or the like, the spread of the adhesive inward in the radial direction is effectively suppressed, unlike in the case where the guide pin 19 has a narrow cylindrical shape. Further, each guide pin 19 has a plate shape, which prevents the guide pin 19 from being easily damaged, unlike in the case where the guide pin 19 has a narrow cylindrical shape.

Each guide pin 19 extends in a direction apart from the side opposed wall 21 in plan view. According to the above structure, as shown in Fig. 5, a space 50 that is surrounded by two guide pins 19, the outward opposed wall 20, and two side opposed walls 21 is formed. When the connecting wire 7 hooked to the guide pin 19 is fixed with an adhesive or the like, the spread of the adhesive inward in the radial direction is more effectively suppressed. The space 50 may be surrounded by one guide pin 19, the outward opposed wall 20, and two side opposed walls 21.

Each guide hook 18 is disposed so as to be visible from the rotation axis 2C of the resolver stator 2. According to the above structure, a variation in the posture of a winding nozzle can be suppressed when the connecting wire 7 is hooked to the corresponding guide hook 18, unlike in the case where each guide hook 18 is disposed at a location where the guide hook 18 is not visible from the rotation axis 2C of the resolver stator 2. Therefore, a time required for winding can be reduced.

The resolver stator 2 includes: the stator core 4 including the yoke 8 having an annular shape, and the plurality of teeth 9 projecting inward in the radial direction from the yoke 8; the plurality of coils 6 wound around the plurality of teeth 9, respectively; the connecting wires 7; the guide hooks 18 that guide the connecting wires 7; and the external connecting portion 30 that holds the end 7A of each of the connecting wires 7. The resolver stator 2 has the upward direction (first axial direction) parallel to the rotation axis 2C of the resolver stator 2, and the downward direction (second axial direction) opposite to the upward direction. The external connecting portion 30 includes the terminals 32. Each terminal 32 projects upward and is electrically connected to the end 7A of each connecting wire 7. The connecting wire 7 extends from the coil outside space 31, which is located outward in the radial direction relative to each coil 6 and located on the upward direction side (upper side) relative to the stator core 4, toward the terminal 32 of the external connecting portion 30. The connecting wire 7 is hooked to the guide hook 18 so as to be curved in a convex shape projecting downward while extending from the coil outside space 31 to the terminal 32 of the external connecting portion 30. According to the above structure, the connecting wire 7 is curved downward once before reaching the terminal 32 of the external connecting portion 30 from the coil outside space 31. This structure makes it possible to start winding the end 7A of the connecting wire 7 from the root of the terminal 32, unlike in the case where the connecting wire 7 is not curved downward. Further, since it is possible to start winding the end 7A of the connecting wire 7 from the root of the terminal 32, the amount of adhesive required to fix the end 7A of the connecting wire 7 to the terminal 32 with the adhesive can be reduced.

As shown in Fig. 6, each guide hook 18 also projects inward in the radial direction and downward, and faces each connecting wire 7 in the radial direction.

### (Second Exemplary Embodiment)

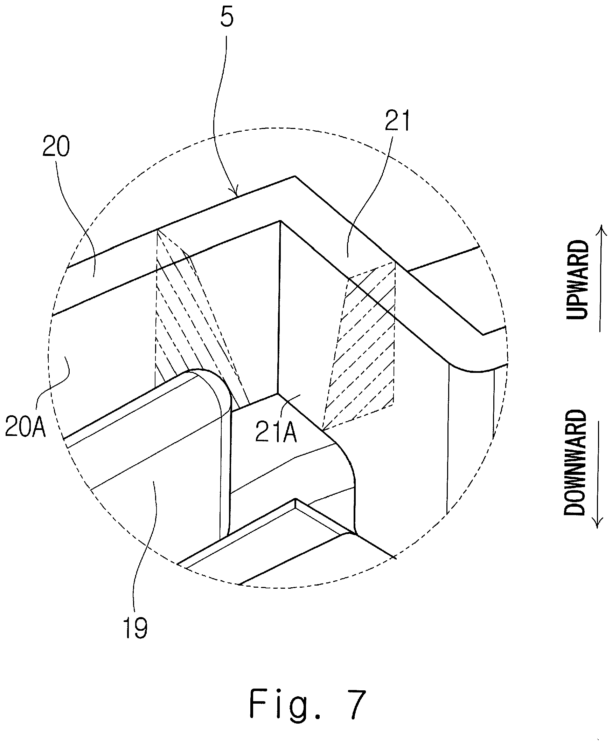

Next, a second exemplary embodiment will be described with reference to Fig. 7. Differences between the second exemplary embodiment and the first exemplary embodiment will be mainly described below, and repeated explanations are omitted.

In the second exemplary embodiment, an opposed surface 21A that faces the guide pin 19 of each side opposed wall 21 is inclined so as to approach the guide pin 19 toward the downward direction. According to the above structure, the volume of the space 50 (also see Fig. 5) which is surrounded by two guide pins 19, the outward opposed wall 20, and two side opposed walls 21 is reduced. Accordingly, when the connecting wire 7 hooked to the guide pin 19 is fixed with an adhesive or the like, the amount of required adhesive is reduced, which contributes to a reduction in the weight of the resolver stator 2. Note that in Fig. 7, the sectional shape of the side opposed wall 21 is illustrated by hatching.

Similarly, an opposed surface 20A facing the guide pin 19 of the outward opposed wall 20 is inclined so as to approach the guide pin 19 toward the downward direction. According to the above structure, the volume of the space 50 (also see Fig. 5) surrounded by two guide pins 19, the outward opposed wall 20, and two side opposed walls 21 is reduced. Accordingly, when the connecting wire 7 hooked to the guide pin 19 is fixed with an adhesive or the like, the amount of required adhesive is reduced, which contributes to a reduction in the weight of the resolver stator 2. Note that in Fig. 7, the sectional shape of the outward opposed wall 20 is illustrated by hatching.

In the above exemplary embodiments, the resin functional portion 5 includes the core upper surface cover portion 15, the core lower surface cover portion 16, and the core inner peripheral surface cover portion 17. However, the core upper surface cover portion 15 and the core lower surface cover portion 16 can be omitted.

Each connecting wire 7 may electrically connect two coils 6 that are adjacent to each other in the circumferential direction, or may electrically connect two coils 6 that are not adjacent to each other in the circumferential direction. Two coils 6 to be electrically connected by each connecting wire 7, or which coil 6 is to be electrically connected to which terminal 32 of the external connecting portion 30 is determined depending on how to wind the excitation coils and detection coils around the teeth 9, or which one of one-phase excitation two-phase detection, two-phase excitation one-phase detection, and two-phase excitation two-phase detection is adopted by the resolver stator 2.

In the exemplary embodiment described above, each terminal 32 has a pin shape, but instead may have other shapes including a rectangular parallelepiped and a ring shape. Each connecting wire 7 may be directly connected to a cable for external wiring (not shown), without using each terminal 32.

In the above exemplary embodiments, the terminal holding portion 33 is formed integrally with the resin functional portion 5, but instead may be formed separately from the resin functional portion 5.

## Claims

1. A resolver stator (2) comprising:
a stator core (4) including a yoke (8) having an annular shape, and a plurality of teeth (9) projecting inward in a radial direction from the yoke (8);
a plurality of coils (6) wound around the plurality of teeth (9), respectively;
a connecting wire (7) that electrically connects the plurality of coils (6) to each other; and
a guide hook (18) that guides the connecting wire (7), wherein
the resolver stator (2) has a first axial direction parallel to a rotation axis of the resolver stator, and a second axial direction opposite to the first axial direction,
the plurality of coils (6) include a first coil (6P) and a second coil (6Q), the first coil (6P) and the second coil (6Q) being adjacent to each other in a circumferential direction,
at least a part of the connecting wire (7) extends from a first coil outside space (31P) to a second coil outside space (31Q), the first coil outside space (31P) being located outward in the radial direction relative to the first coil (6P) and located on the first axial direction side relative to the stator core (4), the second coil outside space (31Q) being located outward in the radial direction relative to the second coil (6Q) and located on the first axial direction side relative to the stator core (4),
the connecting wire (7) is hooked to the guide hook (18) so as to be curved in a convex shape projecting in the second axial direction while extending from the first coil outside space (31P) to the second coil outside space (31Q), and
the guide hook (18) projects inward in the radial direction and faces the connecting wire (7) in the radial direction,
**characterized in that** the guide hook (18) projects in the second axial direction.

2. The resolver stator according to Claim 1, further comprising:
a guide projection (19) that is disposed outward in the radial direction relative to one of the coils (6) and projects in the first axial direction; and
a side opposed wall (21) facing the guide projection (19) in the circumferential direction,
wherein the connecting wire (7) passes outward in the radial direction relative to the guide projection (19) and passes between the guide projection (19) and the side opposed wall while extending from the first coil outside space (31P) to the guide hook (18).

3. The resolver stator according to Claim 2, further comprising an outward opposed wall (20) that is disposed outward in the radial direction relative to the guide projection (19) and faces the guide projection (19) in the radial direction.

4. The resolver stator according to Claim 3, wherein the side opposed wall (21) and the outward opposed wall (20) are joined to each other in a seamless manner.

5. The resolver stator according to Claim 4, wherein the guide projection (19) has a plate shape.

6. The resolver stator according to Claim 5, wherein the guide projection (19) extends in a direction apart from the side opposed wall (21).

7. The resolver stator according to any one of Claims 2 to 6, wherein an opposed surface (21A) of the side opposed wall (21) that faces the guide projection (19) approaches the guide projection (19) toward the second axial direction.

8. The resolver stator according to any one of Claims 3 to 6, wherein an opposed surface (20A) of the outward opposed wall (20) that faces the guide projection (19) approaches the guide projection (19) toward the second axial direction.

9. A resolver stator (2) comprising:
a stator core (4) including a yoke (8) having an annular shape, and a plurality of teeth (9) projecting inward in a radial direction from the yoke (8);
a plurality of coils (6) wound around the plurality of teeth (9), respectively;
a connecting wire (7);
a guide hook (18) that guides the connecting wire (7); and
an external connecting portion (30) that holds an end (7A) of the connecting wire (7), wherein
the resolver stator (2) has a first axial direction parallel to a rotation axis of the resolver stator (2), and a second axial direction opposite to the first axial direction,
the external connecting portion (30) includes a terminal (32) that projects in the first axial direction and is electrically connected to the end (7A) of the connecting wire (7),
the connecting wire (7) extends from a coil outside space (31) to the terminal (32) of the external connecting portion (30), the coil outside space (31) being located outward in the radial direction relative to the coils (6) and located on the first axial direction side relative to the stator core (4),
the connecting wire (7) is hooked to the guide hook (18) so as to be curved in a convex shape projecting in the second axial direction while extending from the coil outside space (31) to the terminal (32) of the external connecting portion (30), and
the guide hook (18) projects inward in the radial direction and faces the connecting wire (7) in the radial direction,
**characterized in that** the guide hook (18) projects in the second axial direction.

10. The resolver stator according to Claim 9, further comprising:
a guide projection (19) that is disposed outward in the radial direction relative to the coils (6) and projects in the first axial direction; and
a side opposed wall (21) facing the guide projection (19) in a circumferential direction;
wherein the connecting wire (7) passes outward in the radial direction relative to the guide projection (19) and passes between the guide projection (19) and the side opposed wall (21) while extending from the coil outside space (31) to the guide hook (18).

11. The resolver stator according to Claim 10, further comprising an outward opposed wall (20) that is disposed outward in the radial direction relative to the guide projection (19) and faces the guide projection (19) in the radial direction.

12. The resolver stator according to Claim 11, wherein the side opposed wall (21) and the outward opposed wall (20) are joined to each other in a seamless manner.

13. The resolver stator according to Claim 12, wherein the guide projection (19) has a plate shape.

14. The resolver stator according to Claim 13, wherein the guide projection (19) extends in a direction apart from the side opposed wall (21).

15. The resolver stator according to any one of Claims 10 to 14, wherein an opposed surface (21A) of the side opposed wall (21) that faces the guide projection (19) approaches the guide projection (19) toward the second axial direction.

16. The resolver stator according to any one of Claims 11 to 14, wherein an opposed surface (20A) of the outward opposed wall (20) that faces the guide projection (19) approaches the guide projection (19) toward the second axial direction.

## Patentansprüche

1. Resolver-Stator (2), umfassend:
einen Statorkern (4), enthaltend ein Joch (8) in einer Ringform und mehrere Zähne (9), die in einer radialen Richtung vom Joch (8) nach innen vorstehen;
mehrere Spulen (6), die jeweils um die mehreren Zähne (9) gewickelt sind;
einen Verbindungsdraht (7), der die mehreren Spulen (6) elektrisch miteinander verbindet; und
einen Führungshaken (18), der den Verbindungsdraht (7) führt, wobei
der Resolver-Stator (2) eine erste Achsenrichtung parallel zu einer Drehachse des Resolver-Stators und eine zweite Achsenrichtung, die der ersten Achsenrichtung entgegengesetzt ist, hat,
die mehreren Spulen (6) eine erste Spule (6P) und eine zweite Spule (6Q) enthalten, wobei die erste Spule (6P) und die zweite Spule (6Q) in Umfangsrichtung nebeneinander liegen,
zumindest ein Teil des Verbindungsdrahts (7) sich von einem ersten Spulenaußenseitenraum (31P) zu einem zweiten Spulenaußenseitenraum (31Q) erstreckt, wobei der erste Spulenaußenseitenraum (31P) in radialer Richtung relativ zur ersten Spule (6P) außerhalb gelegen ist und auf der ersten Achsenrichtungsseite relativ zum Statorkern (4) gelegen ist, der zweite Spulenaußenseitenraum (31Q) in radialer Richtung relativ zur zweiten Spule (6Q) außerhalb gelegen ist und auf der ersten Achsenrichtungsseite relativ zum Statorkern (4) gelegen ist,
der Verbindungsdraht (7) am Führungshaken (18) eingehakt ist, sodass er in einer konvexen Form gekrümmt ist, die in der zweiten Achsenrichtung vorsteht, während er sich vom ersten Spulenaußenseitenraum (31P) zum zweiten Spulenaußenseitenraum (31Q) erstreckt, und
der Führungshaken (18) in der radialen Richtung nach innen ragt und dem Verbindungsdraht (7) in radialer Richtung zugewandt ist,
**dadurch gekennzeichnet, dass** der Führungshaken (18) in der zweiten Achsenrichtung vorragt.

2. Resolver-Stator nach Anspruch 1, ferner umfassend:
einen Führungsvorsprung (19), der in radialer Richtung relativ zu einer der Spulen (6) außerhalb angeordnet ist und in der ersten Achsenrichtung vorsteht; und
eine seitlich gegenüberliegende Wand (21), die dem Führungsvorsprung (19) in der Umfangsrichtung zugewandt ist,
wobei der Verbindungsdraht (7) in radialer Richtung relativ zum Führungsvorsprung (19) nach außen verläuft und zwischen dem Führungsvorsprung (19) und der seitlich gegenüberliegenden Wandverläuft, während er sich vom ersten Spulenaußenseitenraum (31P) zum Führungshaken (18) erstreckt.

3. Resolver-Stator nach Anspruch 2, ferner umfassend eine nach außen gegenüberliegende Wand (20), die in radialer Richtung relativ zum Führungsvorsprung (19) nach außen angeordnet ist und dem Führungsvorsprung (19) in der radialen Richtung zugewandt ist.

4. Resolver-Stator nach Anspruch 3, wobei die seitlich gegenüberliegende Wand (21) und die nach außen gegenüberliegende Wand (20) nahtlos miteinander verbunden sind.

5. Resolver-Stator nach Anspruch 4, wobei der Führungsvorsprung (19) eine Plattenform aufweist.

6. Resolver-Stator nach Anspruch 5, wobei sich der Führungsvorsprung (19) in einer Richtung weg von der seitlich gegenüberliegenden Wand (21) erstreckt.

7. Resolver-Stator nach einem der Ansprüche 2 bis 6, wobei sich eine gegenüberliegende Fläche (21A) der seitlich gegenüberliegenden Wand (21), die dem Führungsvorsprung (19) zugewandt ist, dem Führungsvorsprung (19) zur zweiten Achsenrichtung hin nähert.

8. Resolver-Stator nach einem der Ansprüche 3 bis 6, wobei sich eine gegenüberliegende Fläche (20A) der nach außen gegenüberliegenden Wand (20), die dem Führungsvorsprung (19) zugewandt ist, dem Führungsvorsprung (19) zur zweiten Achsenrichtung hin nähert.

9. Resolver-Stator (2), umfassend:
einen Statorkern (4), enthaltend ein Joch (8) in einer Ringform und mehrere Zähne (9), die in einer radialen Richtung vom Joch (8) nach innen vorstehen;
mehrere Spulen (6), die jeweils um die mehreren Zähne (9) gewickelt sind;
einen Verbindungsdraht (7);
einen Führungshaken (18), der den Verbindungsdraht (7) führt; und
einen äußeren Verbindungsabschnitt (30), der ein Ende (7A) des Verbindungsdrahts (7) hält, wobei
der Resolver-Stator (2) eine erste Achsenrichtung parallel zu einer Drehachse des Resolver-Stators (2) und eine zweite Achsenrichtung, die der ersten Achsenrichtung entgegengesetzt ist, hat,
der äußere Verbindungsabschnitt (30) einen Anschluss (32) enthält, der in der ersten Achsenrichtung vorsteht und mit dem Ende (7A) des Verbindungsdrahts (7) elektrisch verbunden ist,
der Verbindungdraht (7) sich von einem Spulenaußenraum (31) zum Anschluss (32) des äußeren Verbindungsabschnitts (30) erstreckt, wobei der Spulenaußenraum (31) in der radialen Richtung relativ zu den Spulen (6) außerhalb gelegen ist und auf der ersten Achsenrichtungsseite relativ zum Statorkern (4) gelegen ist,
der Verbindungsdraht (7) am Führungshaken (18) eingehakt ist, sodass er in einer konvexen Form gekrümmt ist, die in der zweiten Achsenrichtung vorsteht, während er sich vom Spulenaußenseitenraum (31) zum Anschluss (32) des äußeren Verbindungsabschnitts (30) erstreckt, und
der Führungshaken (18) in der radialen Richtung nach innen ragt und dem Verbindungsdraht (7) in radialer Richtung zugewandt ist,
**dadurch gekennzeichnet, dass** der Führungshaken (18) in der zweiten Achsenrichtung vorragt.

10. Resolver-Stator nach Anspruch 9, ferner umfassend:
einen Führungsvorsprung (19), der in radialer Richtung relativ zu einer der Spulen (6) außerhalb angeordnet ist und in der ersten Achsenrichtung vorsteht; und
eine seitlich gegenüberliegende Wand (21), die dem Führungsvorsprung (19) in der Umfangsrichtung zugewandt ist;
wobei der Verbindungsdraht (7) in radialer Richtung relativ zum Führungsvorsprung (19) nach außen verläuft und zwischen dem Führungsvorsprung (19) und der seitlich gegenüberliegenden Wand (21) verläuft, während er sich vom Spulenaußenseitenraum (31) zum Führungshaken (18) erstreckt.

11. Resolver-Stator nach Anspruch 10, ferner umfassend eine nach außen gegenüberliegend Wand (20), die in radialer Richtung relativ zum Führungsvorsprung (19) nach außen angeordnet ist und dem Führungsvorsprung (19) in der radialen Richtung zugewandt ist.

12. Resolver-Stator nach Anspruch 11, wobei die seitlich gegenüberliegende Wand (21) und die nach außen gegenüberliegende Wand (20) nahtlos miteinander verbunden sind.

13. Resolver-Stator nach Anspruch 12, wobei der Führungsvorsprung (19) eine Plattenform aufweist.

14. Resolver-Stator nach Anspruch 13, wobei sich der Führungsvorsprung (19) in einer Richtung weg von der seitlich gegenüberliegenden Wand (21) erstreckt.

15. Resolver-Stator nach einem der Ansprüche 10 bis 14, wobei sich eine gegenüberliegende Fläche (21A) der seitlich gegenüberliegenden Wand (21), die dem Führungsvorsprung (19) zugewandt ist, dem Führungsvorsprung (19) zur zweiten Achsenrichtung hin nähert.

16. Resolver-Stator nach einem der Ansprüche 11 bis 14, wobei sich eine gegenüberliegende Fläche (20A) der nach außen gegenüberliegenden Wand (20), die dem Führungsvorsprung (19) zugewandt ist, dem Führungsvorsprung (19) zur zweiten Achsenrichtung hin nähert.

## Revendications

1. Stator de résolveur (2) comprenant :
un noyau de stator (4) comprenant une culasse (8) ayant une forme annulaire, et une pluralité de dents (9) faisant saillie vers l'intérieur dans une direction radiale à partir de la culasse (8);
une pluralité de bobines (6) enroulées autour de la pluralité de dents (9), respectivement;
un fil de connexion (7) qui connecte électriquement la pluralité de bobines (6) les unes aux autres; et
un crochet de guidage (18) qui guide le fil de connexion (7), dans lequel le stator de résolveur (2) a une première direction axiale parallèle à un axe de rotation du stator de résolveur, et une seconde direction axiale opposée à la première direction axiale,
la pluralité de bobines (6) comprend une première bobine (6P) et une seconde bobine (6Q), la première bobine (6P) et la seconde bobine (6Q) étant adjacentes l'une à l'autre dans une direction circonférentielle,
au moins une partie du fil de connexion (7) s'étend d'un premier espace extérieur de bobine (31P) à un second espace extérieur de bobine (31Q), le premier espace extérieur de bobine (31P) étant situé vers l'extérieur dans la direction radiale par rapport à la première bobine (6P) et situé sur le premier côté de direction axiale par rapport au noyau du stator (4), le second espace extérieur de bobine (31Q) étant situé vers l'extérieur dans la direction radiale par rapport à la seconde bobine (6Q) et situé sur le premier côté de direction axiale par rapport au noyau du stator (4),
le fil de connexion (7) est accroché au crochet de guidage (18) de manière à être incurvé dans une forme convexe faisant saillie dans la seconde direction axiale tout en s'étendant du premier espace extérieur de bobine (31P) au second espace extérieur de bobine (31Q), et
le crochet de guidage (18) fait saillie vers l'intérieur dans la direction radiale et fait face au fil de connexion (7) dans la direction radiale,
**caractérisé en ce que** le crochet de guidage (18) fait saillie dans la seconde direction axiale.

2. Stator de résolveur selon la revendication 1, comprenant en outre :
une saillie de guidage (19) qui est disposée vers l'extérieur dans la direction radiale par rapport à l'une des bobines (6) et fait saillie dans la première direction axiale; et
une paroi latérale opposée (21) tournée vers la saillie de guidage (19) dans la direction circonférentielle,
dans lequel le fil de connexion (7) passe vers l'extérieur dans la direction radiale par rapport à la saillie de guidage (19) et passe entre la saillie de guidage (19) et la paroi latérale opposée tout en s'étendant depuis le premier espace extérieur de bobine (31P) jusqu'au crochet de guidage (18).

3. Stator de résolveur selon la revendication 2, comprenant en outre une paroi opposée vers l'extérieur (20) qui est disposée vers l'extérieur dans la direction radiale par rapport à la saillie de guidage (19) et fait face à la saillie de guidage (19) dans la direction radiale.

4. Stator de résolveur selon la revendication 3, dans lequel la paroi latérale opposée (21) et la paroi extérieure opposée (20) sont reliées l'une à l'autre sans soudure.

5. Stator de résolveur selon la revendication 4, dans lequel la saillie de guidage (19) a une forme de plaque.

6. Stator de résolveur selon la revendication 5, dans lequel la saillie de guidage (19) s'étend dans une direction opposée à la paroi latérale opposée (21).

7. Stator de résolveur selon l'une quelconque des revendications 2 à 6, dans lequel une surface opposée (21A) de la paroi latérale opposée (21) qui fait face à la saillie de guidage (19) s'approche de la saillie de guidage (19) vers la seconde direction axiale.

8. Stator de résolveur selon l'une quelconque des revendications 3 à 6, dans lequel une surface opposée (20A) de la paroi opposée extérieure (20) qui fait face à la saillie de guidage (19) s'approche de la saillie de guidage (19) vers la seconde direction axiale.

9. Stator de résolveur (2) comprenant :
un noyau de stator (4) comprenant une culasse (8) ayant une forme annulaire, et une pluralité de dents (9) faisant saillie vers l'intérieur dans une direction radiale à partir de la culasse (8);
une pluralité de bobines (6) enroulées autour de la pluralité de dents (9), respectivement;
un fil de connexion (7);
un crochet de guidage (18) qui guide le fil de connexion (7); et
une partie de connexion externe (30) qui maintient une extrémité (7A) du fil de connexion (7),
le stator de résolveur (2) ayant une première direction axiale parallèle à un axe de rotation du stator de résolveur (2), et une seconde direction axiale opposée à la première direction axiale,
la partie de connexion externe (30) comprend une borne (32) qui fait saillie dans la première direction axiale et est connectée électriquement à l'extrémité (7A) du fil de connexion (7),
le fil de connexion (7) s'étend d'un espace extérieur de bobine (31) à la borne (32) de la partie de connexion externe (30), l'espace extérieur de bobine (31) étant situé vers l'extérieur dans la direction radiale par rapport aux bobines (6) et situé sur le premier côté de direction axiale par rapport au noyau de stator (4),
le fil de connexion (7) est accroché au crochet de guidage (18) de manière à être incurvé dans une forme convexe faisant saillie dans la seconde direction axiale tout en s'étendant de l'espace extérieur de bobine (31) à la borne (32) de la partie de connexion externe (30), et
le crochet de guidage (18) fait saillie vers l'intérieur dans la direction radiale et fait face au fil de connexion (7) dans la direction radiale,
**caractérisé en ce que** le crochet de guidage (18) fait saillie dans la seconde direction axiale.

10. Stator de résolveur selon la revendication 9, comprenant en outre :
une saillie de guidage (19) qui est disposée vers l'extérieur dans la direction radiale par rapport aux bobines (6) et fait saillie dans la première direction axiale; et
une paroi latérale opposée (21) tournée vers la saillie de guidage (19) dans une direction circonférentielle;
dans lequel le fil de connexion (7) passe vers l'extérieur dans la direction radiale par rapport à la saillie de guidage (19) et passe entre la saillie de guidage (19) et la paroi latérale opposée (21) tout en s'étendant de l'espace extérieur de la bobine (31) au crochet de guidage (18).

11. Stator de résolveur selon la revendication 10, comprenant en outre une paroi opposée vers l'extérieur (20) qui est disposée vers l'extérieur dans la direction radiale par rapport à la saillie de guidage (19) et fait face à la saillie de guidage (19) dans la direction radiale.

12. Stator de résolveur selon la revendication 11, dans lequel la paroi latérale opposée (21) et la paroi extérieure opposée (20) sont reliées l'une à l'autre sans soudure.

13. Stator de résolveur selon la revendication 12, dans lequel la saillie de guidage (19) a une forme de plaque.

14. Stator de résolveur selon la revendication 13, dans lequel la saillie de guidage (19) s'étend dans une direction opposée à la paroi latérale opposée (21).

15. Stator de résolveur selon l'une quelconque des revendications 10 à 14, dans lequel une surface opposée (21A) de la paroi latérale opposée (21) qui fait face à la saillie de guidage (19) s'approche de la saillie de guidage (19) vers la seconde direction axiale.

16. Stator de résolveur selon l'une quelconque des revendications 11 à 14, dans lequel une surface opposée (20A) de la paroi opposée extérieure (20) qui fait face à la saillie de guidage (19) s'approche de la saillie de guidage (19) vers la seconde direction axiale.
